Europäisches Patentamt

European Patent Office

Office européen des brevets

(11) Veröffentlichungsnummer: **0 159 681**
**A2**

# EUROPÄISCHE PATENTANMELDUNG

(21) Anmeldenummer: **85104807.4**

(22) Anmeldetag: **20.04.85**

(51) Int. Cl.⁴: **B 29 B 7/72,** G 05 D 11/02,
**B 01 F 15/04**

(30) Priorität: **21.04.84 DE 3415056**
**02.10.84 DE 3436102**

(43) Veröffentlichungstag der Anmeldung: **30.10.85**
**Patentblatt 85/44**

(84) Benannte Vertragsstaaten: **BE DE FR GB IT NL SE**

(71) Anmelder: **Berweger, Manfred, Hortensiadreef 17,
B-2180 Kalmthout (BE)**

(72) Erfinder: **Berweger, Manfred, Hortensiadreef 17,
B-2180 Kalmthout (BE)**

(54) **Mehrkomponenten Proportionieranlage.**

(57) Die erfindungsgemässe Anlage besteht aus mehreren unabhängigen Zylindereinheiten, die mit jeweils einer Materialkomponente beschickt werden. Der Eigendruck des Komponentenmaterials treibt Kolben innerhalb der Zylinder voran und die Kolben ihrerseits drücken Komponentenmaterial, das sich vom vorhergehenden Hub in einer anderen Zylinderkammer befindet, in eine Abfuhrleitung. Manuell (offener Steuerkreis) oder mittels eines zentralen Steuergerätes (geschlossener Steuerkreis) lassen sich die Kolbenbewegungen derart aufeinander abstimmen, dass Komponentenmaterial kontinuierlich in einem eingestellten Volumenverhältnis ausgestossen wird. Bei erfindungsgemässen Anlagen mit zentraler Steuerung der Ein-/Auslassventile wird die Förderung unterbrochen, sobald ein Komponentenmaterial ausfällt.

## MEHRKOMPONENTEN PROPORTIONIERANLAGE

Die Erfindung betrifft eine antriebslose Proportionieranlage, mit deren Hilfe fliess- oder schüttfähige Stoffe (nachfolgend "Materialkomponenten" oder "Komponentenmaterial" genannt) unter Druck in beliebig wählbaren Volumenverhältnissen kontinuierlich dosiert werden können.

Die Anlage besteht aus mindestens je einer Zylindereinheit für jede Materialkomponente, wobei als Zylinder-einheiten sowohl einzelne Arbeitszylinder mit Kolben angesehen werden, als auch mehrere Arbeitszylinder, deren Kolben miteinander direkt (mechanisch, hydraulisch etc.) verbunden sind. Zylindereinheiten untereinander stehen lediglich indirekt über Steuerleitungen in Verbindung. Eine der Zylindereinheiten wird als "Referenzeinheit" bezeichnet. alle übrigen als "Satelliteinheiten".

Jede Zylindereinheit ist versehen mit Geräten zur Steuerung von Ein- und Auslass der Materialkomponente, mit Sensoren zur Signalisation der Kolbenposition, mit Sensoren zur Signalisation der Kolbengeschwindigkeit und mit Einrichtungen zur Beeinflussung der Kolbengeschwindigkeit.

Zur Anlage gehören weiterhin entweder Geräte (Hubanzeiger. Geschwindigkeitsanzeiger), mit denen sich Abweichungen der Hubgeschwindigkeitsverhältnisse von einem Soll-Verhältnis ermitteln lassen (offener Steuerkreis), oder ein Steuergerät, das die Hubgeschwindigkeiten ständig auf dem vorgegebenen Verhältnis hält (geschlossener Steuerkreis).

Im Betrieb werden die Zylinderkammern unter Druck mit Komponentenmaterial gefüllt, wobei der Kolben Komponentenmaterial, das sich vom vorhergehen-

0159681

den Hub in einer anderen Zylinderkammer befindet, in die Abfuhrleitung drückt. Die ausgestossenen Volumina entsprechen den gewünschten Mengenverhältnissen zwischen den Materialkomponenten. Dies wird erreicht:

- indem pro Hub aus jeder Zylindereinheit ein definiertes Volumen in die Abfuhrleitung gedrückt wird und

- indem die Hubgeschwindigkeiten aller angeschlossenen Zylindereinheiten auf einem definierten Verhältnis zueinander gehalten werden.

Bei Ausführungsformen erfindungsgemässer Anlagen, die es erlauben - durch Veränderung der Hublänge oder des Kolbendurchmessers - die Hubvolumina dem geforderten Verhältnis der Materialkomponenten entsprechend einzustellen, beschränkt sich die Geschwindigkeitssteuerung in der Regel darauf, Unterschiede festzustellen zwischen den Zeitpunkten, zu denen ein Hub abgeschlossen ist bzw. zu denen beliebige, proportional zur Gesamtlänge angeordnete Zwischenpositionen erreicht werden, und bei Abweichungen vom vorgegebenen Verhältnis die o.g. Einrichtung zur Beeinflussung der Kolbengeschwindigkeit entsprechend zu verstellen.

Bei Ausführungsformen erfindungsgemässer Anlagen mit unveränderlichen Hubvolumina besteht die Geschwindigkeitssteuerung darin, zu ermitteln, ob das Verhältnis der Anzahl Hübe pro Zeiteinheit oder das Verhältnis der Hubgeschwindigkeit (ggfs bereinigt um Unterschiede im Hubvolumen) dem vorgegebenen Mengenverhältnis der Materialkomponenten entspricht und bei Abweichungen die o.g. Einrichtung zur Beeinflussung der Kolbengeschwindigkeit entsprechend zu verändern.

Proportionieranlagen wie die gemäss Erfindung werden verwendet, um Stoffe zu verarbeiten, bei denen zwei oder mehr Komponenten in einem bestimmten Verhältnis gemischt werden müssen, um ein gewünschtes

0159681

Endprodukt zu erhalten. Eine grosse Zahl chemischer Produkte gehört in diese Gruppe, wobei besonders Kunststoffprodukte einen grossen Bekanntheitsgrad - als Farben, Klebemittel, Spachtelmassen usw. - erreicht haben.

Es gibt bereits Mehrkomponenten-Dosieranlagen, die mit frei beweglichen Kolben innerhalb von Dosierzylindern arbeiten und bei denen die Zu- und Abfuhr des Komponentenmaterials über Hub-Endsensoren in Verbindung mit Ein-/Auslassventilen gesteuert wird (DE-OS-24 22 341, GB 20 15 479, GB 14 32 741). Anlagen, bei denen die Fortschrittsgeschwindigkeiten der Kolben derart gesteuert werden, dass die Komponenten kontinuierlich im eingestellten Volumenverhältnis ausgestossen werden, sind jedoch noch nicht bekannt.

Bei der erfindungsgemässen Anlage werden unabhängige Zylindereinheiten mit Komponentenmaterial beschickt. Der Eigendruck des Komponentenmaterials treibt Kolben innerhalb der Zylinder voran und die Kolben ihrerseits drücken Komponentenmaterial, das sich vom vorhergehenden Hub in einer anderen Zylinderkammer befindet, in eine Abfuhrleitung. Manuell (offener Steuerkreis) oder automatisch (geschlossener Steuerkreis) lassen sich die Kolbenbewegungen derart aufeinander abstimmen, dass Komponentenmaterial kontinuierlich in einem eingestellten Volumenverhältnis ausgestossen wird. Bei erfindungsgemässen Anlagen mit zentraler Steuerung der Ein-/Auslassventile wird die Förderung unterbrochen, sobald ein Komponentenmaterial ausfällt. -

Mit der Erfindung soll eine Anlage zur Verfügung gestellt werden,
- die die Einschränkungen und Nachteile bekannter Anlagen vermeidet;
- die relativ kompakt und klein ist und während des Betriebs mühelos bewegt werden kann;

0159681

- die ohne Eigenantrieb arbeitet und an beliebige Fördergeräte angeschlossen werden kann;
- die sich mit beliebigen Steuermedien betreiben lässt (Pressluft. Elektrizität usw.):
- die einfach auf beliebige Dosierverhältnisse einstellbar ist.

Diese und andere Eigenschaften der Anlage werden aus der folgenden Beschreibung möglicher Ausbildungsformen deutlicher. Der Übersichtlichkeit wegen beschränken sich die folgenden Ausführungen auf Anlagen für 2 Komponenten; sie sind sinngemäss aber für Anlagen mit mehr als 2 Komponenten anwendbar. Als Sensor- und Steuerelemente werden pneumatisch betätigte Elemente dargestellt, aber beliebig anders betätigte Elemente (elektrische, hydraulische, mechanische) sind sinngemäss einsetzbar.

Bild 1, 3 und 5 zeigen schematisch verschiedene Ausbildungsformen erfindungsgemässer Anlagen.

Bild 2 zeigt die Steuerung einer Anlage gemäss Bild 1, und Bild 4 zeigt die Steuerung einer Anlage gemäss Bild 3.

Bild 6, 7 und 8 zeigen schematisch verschiedene Ausbildungsformen einzelner Zylindereinheiten für erfindungsgemässe Anlagen.

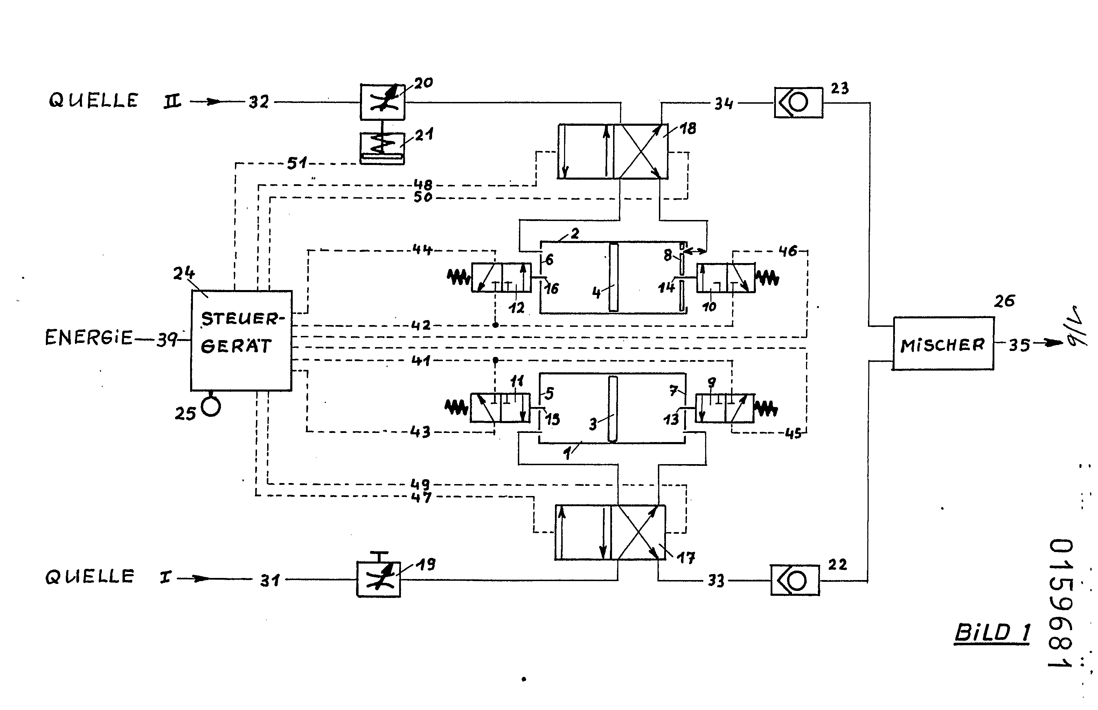

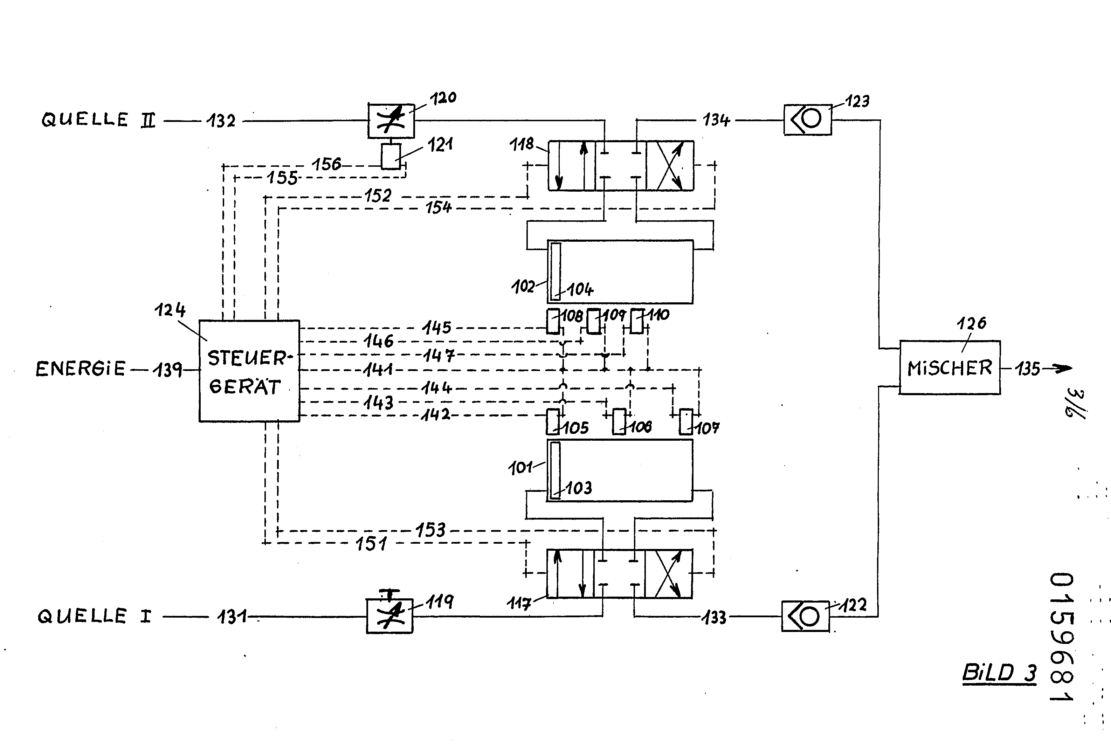

Die Anlagen gemäss Bild 1 und 3 stellen Versionen der erfindungsgemässen Anlage dar, bei der
- die Hubvolumina den gewünschten Mengenverhältnissen entsprechend eingestellt werden können;
- die Kolben-Hubgeschwindigkeit über die Zufuhrgeschwindigkeit der Materialkomponenten geregelt wird;
- die Material Zu-und Abfuhr zur Zylindereinheit und die Hubgeschwindigkeit des Kolbens zentral gesteuert werden (geschlossener Steuerkreis).

0159681

Die Anlage gemäss Bild .1 ist charakterisiert durch:

- Kolben ohne Kolbenstange
- verstellbare Hubbegrenzungsanschläge
- verstellbare, mechanisch betätigte Sensoren an den Hubenden
- 4/2-Wegeventile als Ein/Auslassventile
- Drosselventile in den Zufuhrleitungen
- zentrales Steuergerät, verbunden mit Sensoren, Einlassventilen und Drosselventilen.

1 ist der Arbeitszylinder für Materialkomponente I mit 2 festen Hubenden 5 und 7.

2 ist der Arbeitszylinder für Materialkomponente II mit einem festen Hubende 6 und einem verstellbaren Hubende 8. Durch Arretierung des verstellbaren Hubendes 8 in entsprechender Entfernung vom Hubende 6 wird das gewünschte Volumenverhältnis des Arbeitszylinders 2 zum Arbeitszylinder 1 und damit das gewünschte Förderverhältnis von Komponente II zu Komponente I eingestellt.

3, 4 sind frei bewegliche Kolben innerhalb der Arbeitszylinder 1, 2.

9, 10, 11, 12 sind 3/2-Wegeventile mit Ventilstösseln 13, 14, 15, 16. Ventil 10 mit Stössel 14 ist am verstellbaren Hubende 8 befestigt und wird mit diesem innerhalb des Arbeitszylinders 2 arretiert. Am Ende eines Hubes betätigen die Kolben 3, 4 die Ventilstössel 13,14,15,16 und veranlassen, dass ein Signal an das Steuergerät gegeben wird.

17,18 sind pneumatisch betätigte 4/2-Wegeventile mit Endraststellung.

19 ist ein handbedientes Drosselventil. 20 ist ein Drosselventil, das vom Pneumatikkolben 21 betätigt wird.

22,23 sind Rückschlagventile zwischen 4/2-Wegeventilen 17,18 und Mischer 26.

In der dargestellten Version wird Komponentenmaterial unter Druck von Quelle I in Leitung 31 und von Quelle II in Leitung 32 geliefert. Über die 4/2-Wegeventile gelangen die Materialkomponenten in die jeweils rechte (gemäss Bild 1) Kammer der Arbeitszylinder 1,2 und drücken die Kolben 3,4 in Richtung der Hubenden 5,6. Komponentenmaterial, das sich vom vorhergehenden Hub in der linken (gemäss Bild 1) Kammer befindet, wird dabei über die zugehörigen 4/2-Wegeventile in Leitungen 33,34 gedrückt.

Bei Abschluss der Hübe betätigen die Kolben 3,4 über Stössel 15,16 die 3/2-Wegeventile 11.12 und veranlassen, dass über Leitungen 43,44 je ein Signal an das Steuergerät 24 gegeben wird.

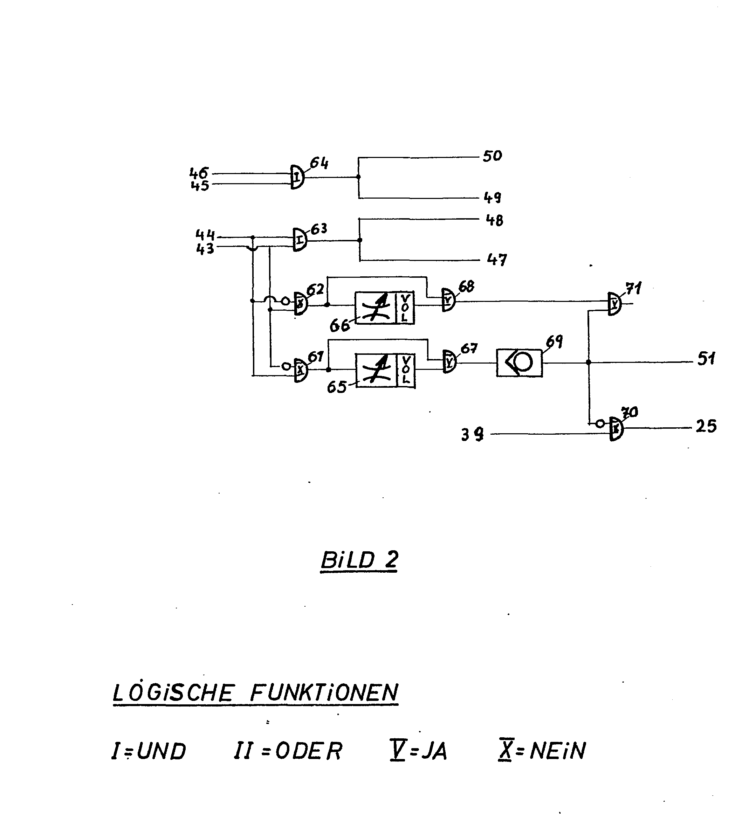

Sobald Leitung 43 wie Leitung 44 ein Signal führt, wird über das UND-Element 63 (Bild 2) ein Ausgangssignal in Leitung 47,48 gegeben und die 4/2-Wegeventile 17,18 umgeschaltet.

Schliesst Kolben 3 seinen Hub vor Kolben 4 ab, wird Ventil 17 nicht umgeschaltet und die Förderung von Komponente I unterbrochen. In Leitung 43 tritt ein Signal auf, ohne dass ein Signal in Leitung 44 vorhanden ist. Infolgedessen wird NOT-Element 62 und über Drossel mit nachgeschaltetem Volumen 66 und JA-Element 68 das JA-Element 71 pulsweise geöffnet und der Pneumatikzylinder 21 entlastet, d.h. das Drosselventil 20 öffnet sich etwas. Der folgende Hub des Kolbens 4 wird entsprechend schneller ausgeführt.

Schliesst Kolben 4 seinen Hub vor Kolben 3 ab, wird über NOT-Element 61, Drossel 65, JA-Element 67 und Pneumatikzylinder 21 das Drosselventil 20 etwas geschlossen.

Die Pulsdauer und damit die Offnungs- und Schliessgeschwindigkeiten der Drosselventile 20 ist an den Drosseln 65,66 einstellbar.

In der dargestellten Version wird die Fliessgeschwindigkeit der Materialkomponenten nur jeweils
einmal pro Zyklus und nicht einmal pro Hub kontrolliert
und, falls erforderlich, geregelt. Bei entsprechender
Auslegung des Steuersystems ist jedoch auch eine Kontrolle und Regelung je Hub möglich.

Ist Drosselventil 20 vollkommen geöffnet, führt
Leitung 51 keinen Druck und wird über NOT-Element 70
das Signal 25 eingeschaltet. Es ist dann erforderlich
Drosselventil 19 von Hand etwas zu schliessen.

Fällt eine der Pumpen I oder II aus, wird der entsprechende Kolben 3 oder 4 nicht bewegt und die Anlage
unterbricht die Förderung.

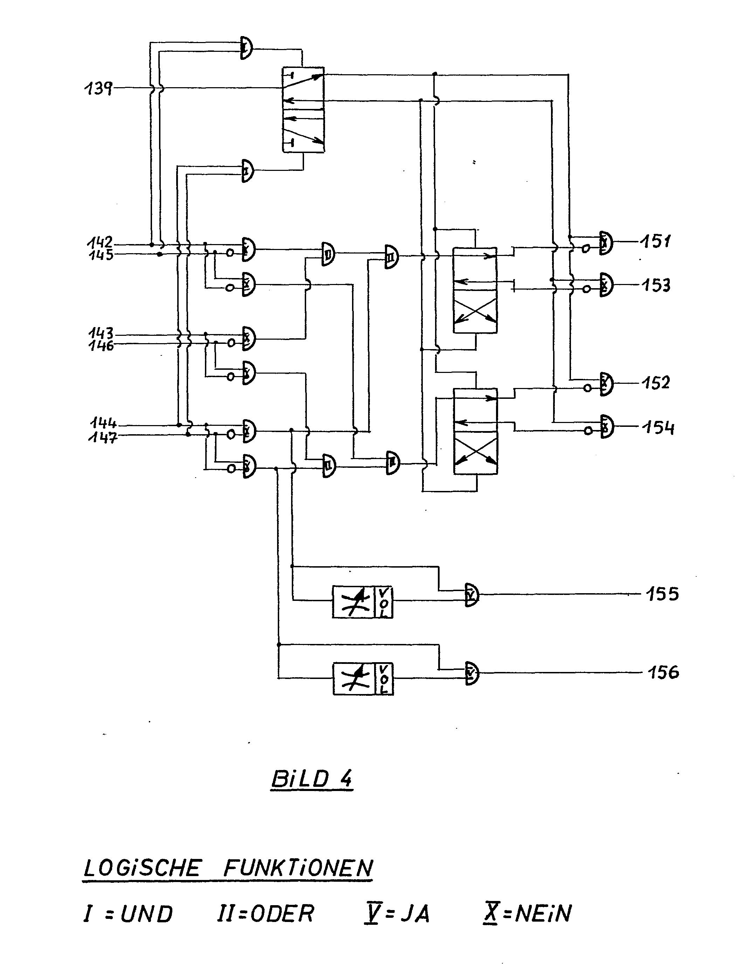

Als Ein/Auslassventile können anstelle der dargestellten 4/2-Wegeventile mit Endraststellung (17,18)
auch beliebige andere Ventile (Nadelventile, Schieber
etc.) verwendet werden, solange die Schaltung des zentralen Steuergerätes auf die Arbeitsweise der Ventile
abgestimmt ist. Bild 3 zeigt beispielsweise 4/3-Wegeventile mit Mittelraststellung (117,118) und Bild 4
die zugehörige Schaltung.

Die Drosselventile (19,20) können, statt in der
Zufuhrleitung, wie in Bild 1 gezeigt, auch in der Abfuhrleitung installiert sein. Anstelle von Drosselventilen sind auch beliebige andere Geräte, die sich zur
Regelung von fliess- oder schüttfähigen Stoffen eignen,
einsetzbar. Auch andere Ventilantriebe als Hubkolben
sind verwendbar, wenn die Schaltung des zentralen
Steuergerätes entsprechend ausgelegt wird. Bild 3
zeigt beispielsweise ein Drosselventil (120) mit
Drehantrieb (121) und Bild 4 die zugehörige Schaltung.

Als Sensoren können anstelle von Schaltern mit
Stösseln beliebige andere Geräte verwendet werden, mit
denen sich gleichwertige Signale an das zentrale
Steuergerät übertragen lassen. Bild 3 zeigt beispielsweise kontaktlose Schalter (105-110).

Der verstellbare, mechanische Hubbegrenzungsanschlag (8) braucht nicht von einem Zylinderkopfdeckel gebildet zu werden, wie in Bild 1 dargestellt, sondern kann z.B. auch die Form eines Dornes haben. Ist die Kompressibilität des Komponentenmaterials vernachlässigbar, kann auf eine mechanische Hubbegrenzung verzichtet und der Hub lediglich durch Unterbrechung der Materialzufuhr bei entsprechender Anordnung der Sensoren begrenzt werden. Bild 3 zeigt beispielsweise eine Anlage mit 3 festen Hub-Endsensoren (105,107,108) und einem verstellbaren Hub-Endsensor (109).

Reicht es in bestimmten Fällen nicht aus, die Dosierung lediglich an den Hubenden zu synchronisieren, kann mit Hilfe zusätzlicher Sensoren und einer entsprechend erweiterten Schaltung der zentralen Steuerung auch an beliebigen Zwischenpositionen eine Synchronisation vorgenommen werden. Bild 3 zeigt schematisch eine Anlage für 2 Komponenten, bei denen zusätzlich zu den End-Sensoren je 1 Zwischen-Sensor verwendet wird.

Die Zwischen-Sensoren (106,109) sind jeweils im gleichen Verhältnis zwischen den End-Sensoren (105,107, 108,110) angeordnet. Bewegen sich die Kolben (103,104) von links nach rechts (gemäss Bild 3) führen Leitungen (151) und (152) Energie und die Ein/Auslassventile (117,118) befinden sich in der linken (gemäss Bild 1) Endstellung, so dass Komponentenmaterial in die linke Zylinderkammer eintritt. Bewegt sich beispielsweise Kolben (103) zu schnell, erregt er Sensor 106 ohne dass Sensor 109 erregt ist. Leitung 143 führt ein Signal und unterbricht über die Schaltung Bild 4 das Signal (151). Ventil (117) schaltet zurück in die Mittelraststellung und unterbricht die Zufuhr von Materialkomponente I bis Kolben (104) den Sensor (109) erregt.

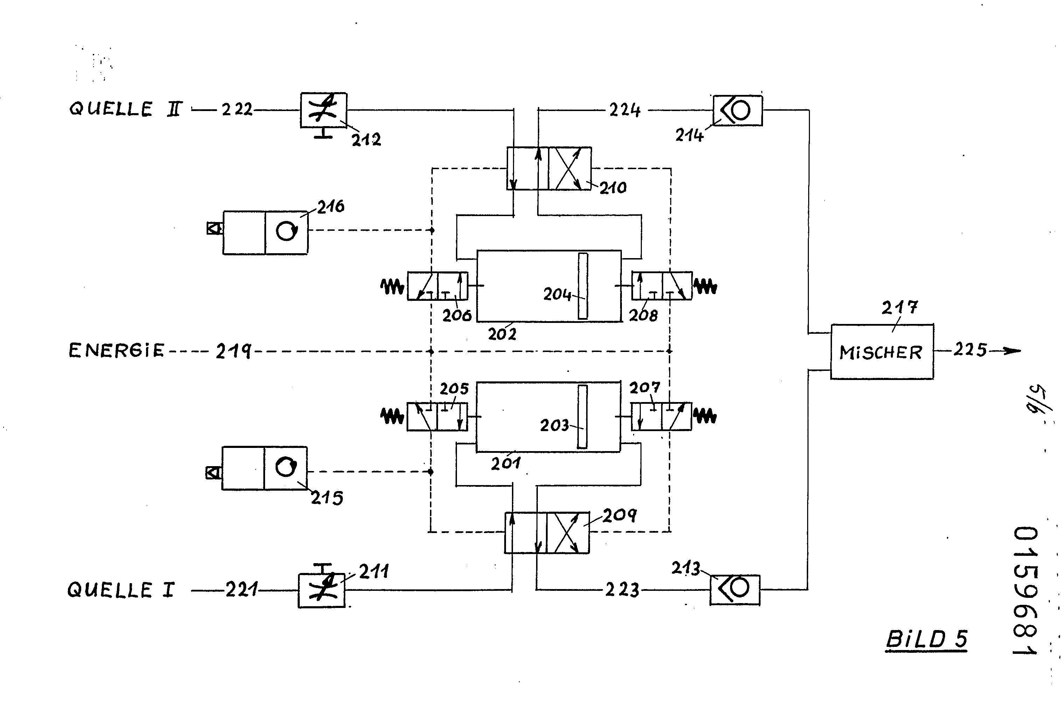

Die Anlage gemäss Bild 5 stellt eine Version der erfindungsgemässen Anlage dar, bei der

- die Hubvolumina unveränderbar sind
- die Kolben-Hubgeschwindigkeit wie bei den in Bild 1 und 3 dargestellten Versionen über die Zufuhrgeschwindigkeit der Materialkomponenten mit Hilfe von Drosselventilen (211,212) geregelt wird
- Die Ein/Auslassventile mit Endraststellung (209,210) von Hub-Endsensoren (205-208) direkt umgeschaltet werden
- die Anzahl Doppelhübe aus Anzeigegeräten (215,216) ersichtlich sind.

Die Kolbengeschwindigkeit wird bei der dargestellten Ausbildungsform dieser Version manuell (offener Steuerkreis) geregelt. Dies kann beispielsweise wie folgt geschehen:

- Aus der Zeitdauer für eine Anzahl abgeschlossener Doppel-Hübe ergibt sich für jede Zylindereinheit die durchschnittliche "Anzahl Hübe pro Zeiteinheit".
- Bei gleichem Hubvolumen bildet das Verhältnis der durchschnittlichen Anzahl Hübe das aktuelle Mischungsverhältnis. Weicht es vom vorgegebenen Mischungsverhältnis ab, wird eines der zwei Drosselventile (211,212), je nach Richtung der Abweichung und Stellung der Drosselventile, verändert.

Werden die Hub-Endsensoren und die Hemmeinrichtung mit einem zentralen Steuergerät verbunden, das für die obigen Rechenfunktionen ausgelegt ist, lässt sich die Kolbengeschwindigkeit auch bei dieser Version automatisch regeln. Ausserdem ist es dann möglich, einen Soll-Wert für eine maximale Abweichung des aktuellen Mischungsverhältnisses vom vorgegebenen Mischungsverhältnis zu speichern, bei dessen Überschreitung ein Signal abgegeben oder die Anlage arretiert wird.

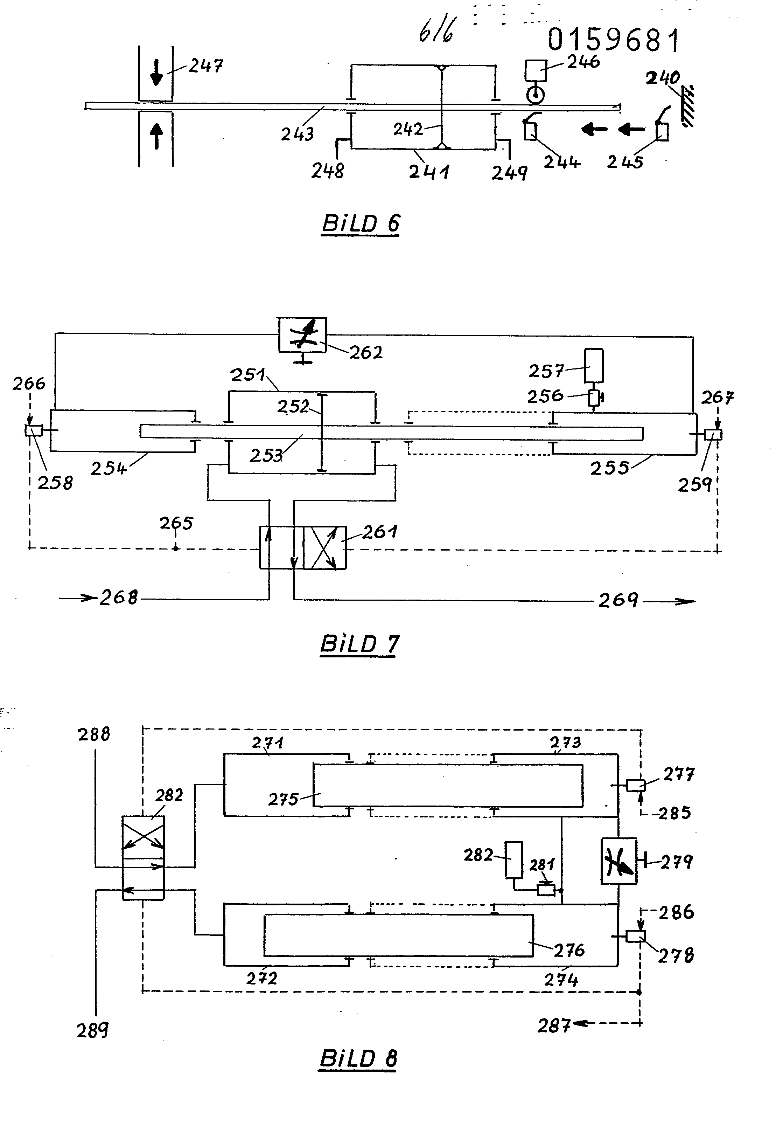

Bild 6 ist eine Prinzipdarstellung einer Zylindereinheit, bei der ein Kolben (242) mit doppelseitiger
Kolbenstange (243) verwendet wird. Die Zylindereinheit
ist charakterisiert dadurch, dass

- Hub-Endsensoren (244,245)
- Geschwindigkeitsmesser (246) und
- Kolben-Bremsvorrichtung (247)

ausserhalb des Arbeitszylinders angebracht sind und
von einer Verlängerung der Kolbenstange aktiviert
werden (244,245,246) bzw. auf eine Verlängerung der
Kolbenstange einwirken (247). Das zugehörige Ein/Auslassventil ist an die Ein/Auslassleitungen (248,249)
anzuschliessen und im Bild nicht dargestellt. Einer
der Hub-Endsensoren (245) ist auf verschiedene Hubhöhen einstellbar. Auch ein verstellbarer Hubbegrenzungs
anschlag (240) könnte auf die Kolbenstange wirken.

Als Hub-Endsensoren (244,245), Geschwindigkeitsmesser (246) und Bremsvorrichtungen (247) lassen sich
beliebige bekannte Geräte verwenden.

Bild 7 zeigt schematisch eine Zylindereinheit nach
dem in Bild 6 dargestellten Prinzip. Als Bremsvorrichtung
werden in diesem Fall zwei Hydraulikzylinder (254,255)
verwendet, deren Kolben direkt mit der Kolbenstange
(253) des Arbeitskolbens (252) verbunden sind. Die zwei
Hydraulikzylinder sind über eine Hydraulikleitung mit
eingebautem Drosselventil (262) miteinander verbunden.
Die Hub-Endsensoren sind in die Zylinderköpfe der
Hydraulikzylinder installiert und direkt mit dem Ein/
Auslassventil (261) verbunden. Der linke Hub-Endsensor
(258) ist ausserdem mit einer Hub-Zählvorrichtung oder
einem zentralen Steuergerät verbunden (265). Einer der
Hydraulikzylinder (255) mit installiertem Hub-Endsensor
(259) ist auf verschiedene Hublängen einstellbar, d.h.
das Hubvolumen der dargestellten Zylindereinheit ist
veränderbar und mechanisch begrenzbar. An den verstellbaren Hydraulikzylinder (255) ist über ein Ventil (256) ein Auffangbehälter (257) angeschlossen, der Hydraulikflüssigkeit, die bei Verringerung der Hublänge anfällt, aufnimmt.

Wird beispielsweise aus der Zufuhrleitung (268)
Komponentenmaterial in die linke (gemäss Bild 7) Zylinderkammer gedrückt, bewegt sich der Arbeitskolben
(252) und dessen Kolbenstange (253) ebenfalls nach
rechts. Hydraulikflüssigkeit, die sich in dem rechten
Hydraulikzylinder (255) befindet, wird über die Verbindungsleitung und das Drosselventil (262) in den
linken Hydraulikzylinder (254) gedrückt. Bei Beendigung des Hubes betätigt die Kolbenstange (253) das
Hub-Endventil (259) und das Hub-Endventil seinerseits
schaltet das Ein/Auslassventil (261) um. Die Materialleitung (268) ist daraufhin mit der rechten Zylinderkammer verbunden. Stellt sich heraus, dass die Geschwindigkeit des Kolbens (252) verändert werden muss,
geschieht dies durch Offnen oder Schliessen des
Drosselventils (262).

Bild 8 zeigt schematisch eine Anlage ähnlich der
Anlage gemäss Bild 7, aber mit 2 Tauchkolben (275,276)
anstelle eines Scheibenkolbens (252) und mit 2 Arbeitszylindern (271,272) anstelle eines einzigen Zylinders
(251) mit je einer Zylinderkammer zu beiden Seiten
des Arbeitskolbens (252).

PATENTANSPRÜCHE

1.- Anlage zum Porportionieren von fliess- oder schüttfähigen Materialkomponenten, bestehend aus:

- mehreren unabhängigen Zylindereinheiten, von denen jede einer Materialkomponente fest zugeordnet ist

- einem oder mehreren Arbeitszylindern je Zylindereinheit mit einem oder mehreren Arbeitskolben, wobei

   * Mehrfachzylinder und Mehrfachkolben jeweils direkt miteinander verbunden sind (mechanisch, hydraulisch etc.)

   * das Kolben-Hubvolumen prädeterminiert ist und

   * die Kolben keinen Fremdantrieb haben, sondern im Betrieb vom Eigendruck des Komponentenmaterials bewegt werden.

- Einrichtungen an jeder Zylindereinheit

   * zum Öffnen und Schliessen der Verbindung zwischen Zylinderkammern einerseits und der Material-Zufuhrleitung oder der Material-Abfuhrleitung andererseits (= Ein/Auslasseinrichtung)

   * zur Signalisation der Kolben-Endposition (= Hub-Endsensoren)

   * zum Hemmen der Kolbenbewegung (= Hemmeinrichtung)

charakterisiert dadurch dass:
beim Füllen einer Zylinderkammer mit Komponentenmaterial aus der Zufuhrleitung der Kolben seinerseits Material derselben Komponente, das sich

0159681

vom vorhergehenden Hub in einer zweiten Kammer derselben Zylindereinheit befindet, in die Ableitung drückt, wobei die Kolben bei Erreichen der Hub-Endposition über die Hub-Endsensoren die Ein/Auslasslass-Einrichtungen umschalten und die Kolbengeschwindigkeiten mit Hilfe der Hemmeinrichtung so eingestellt werden, dass die Abfuhrmengen der Zylindereinheiten jederzeit ein eingestelltes Verhältnis zueinander einhalten.

2.- Anlage gemäss Anspruch 1, dadurch gekennzeichnet, dass die Hemmeinrichtungen aus Fluss-Begrenzungsgeräten in den Zu- oder Abfuhrleitungen der Materialkomponenten bestehen oder aus Bremseinrichtungen, die auf die Arbeitskolben wirken.

3.- Anlage gemäss Anspruch 2, dadurch gekennzeichnet, dass die Hemmeinrichtung manuell eingestellt wird.

4.- Anlage gemäss Anspruch 1, aber zusätzlich mit einem zentralen Steuergerät, das mit den Sensoren zur Signalisation der Hub-Endposition verbunden ist, dadurch gekennzeichnet, dass das Steuergerät Abweichungen des Verhältnisses der Kolbengeschwindigkeiten von einem Soll-Wert aus Hub-Zeit und Hubweg x Kolbenfläche ermittelt und nach Grösse und Richtung anzeigt.

5.- Anlage gemäss Anspruch 1, aber zusätzlich mit Sensoren, die die Kolbengeschwindigkeit direkt signalisieren, und mit einem zentralen Steuergerät, das mit den Geschwindigkeitssensoren verbunden ist, dadurch gekennzeichnet, dass das Steuergerät Abweichungen des Verhältnisses der

0159681

Kolbengeschwindigkeiten von einem Soll-Wert ermittelt und nach Grösse und Richtung anzeigt.

6.- Anlage gemäss Anspruch 4 oder 5, bei der das
Steuergerät aber zusätzlich mit der Hemmeinrichtung verbunden ist, dadurch gekennzeichnet, dass
das Steuergerät bei Abweichungen des ermittelten Geschwindigkeitsverhältnisses vom Soll-
Verhältnis die Stellung der Hemmeinrichtungen
derart verändert, dass die Abweichung für die
Folgehübe verringert wird.

7.- Anlage aemäss Anspruch 4 oder 5, bei der das
Steuergerät aber zusätzlich mit den Ein/Auslassgeräten verbunden ist und bei Abschluss des
Hubes in einer Zylindereinheit das betreffende
Ein/Auslassgerät auf den Rückwärtshub umschaltet (unabhängig von den übrigen Zylindereinheiten), dadurch gekennzeichnet, dass das
Steuergerät die Anlage arretiert, sobald die
Abweichung des ermittelten Kolben-Geschwindigkeitsverhältnisses von einem vorgegebenen Verhältnis einen Soll-Wert überschreitet.

8.- Anlage gemäss Anspruch 1, aber zusätzlich mit
der Möglichkeit, die Hubvolumina der Zylindereinheiten auf beliebige Verhältnisse zueinander
einzustellen und mit einem zentralen Steuergerät,
das mit den Hub-Endsensoren, den Ein/Auslass-
einrichtungen und den Hemmeinrichtungen verbunden
ist, dadurch gekennzeichnet, dass das Steuergerät alle Ein/Auslasseinrichtungen gleichzeitig
umschaltet, und zwar erst dann, wenn alle Kolben
den vorhergehenden Hub abgeschlossen haben, und
dass es bei unterschiedlichen Hubzeiträumen die
Hemmeinrichtungen derart verstellt, dass der

0159681

Unterschied der Hubdauern für die Folgehübe reduziert wird und nach wenigen Hüben alle Kolben ihren Hub gleichzeitig beginnen und gleichzeitig beenden.

9.- Anlage gemäss Anspruch 8, aber an jeder Zylindereinheit zwischen den Endsensoren mit einer gleichen Zahl zusätzlicher Zwischensensoren versehen, die im gleichen Verhältnis zur Gesamt-Hublänge voneinander angebracht sind, dadurch gekennzeichnet, dass bei einem vorauseilenden Kolben das zentrale Steuergerät über die Ein/Auslassgeräte die Materialzu- und abfuhr der betreffenden Zylindereinheit solange unterbricht, bis alle Kolben den gleichen Positionssensor geschaltet haben.

10.- Anlage gemäss Anspruch 8 und 9, dadurch gekennzeichnet, dass Kolben ohne Kolbenstange verwendet werden und die Kolbenbewegungen lediglich durch Drosselung der Material-Zu- oder Abfuhr verzögert werden.

0159681

BiLD 1

**BILD 2**

**LOGISCHE FUNKTIONEN**

$I = UND$     $II = ODER$     $\overline{V} = JA$     $\overline{X} = NEIN$

0159681

**BILD 4**

**LOGISCHE FUNKTIONEN**

$I = UND$    $II = ODER$    $\underline{V} = JA$    $\underline{X} = NEIN$

QUELLE II — 222 — | 212 |

224 — | 214 |

| 210 |

| 216 |

| 206 | 202 | 204 | 208 |

ENERGIE ---- 219 ----

| 205 | 201 | 203 | 207 |

| 215 |

| 209 |

QUELLE I — 221 — | 211 |

223 — | 213 |

| 217 | MISCHER | —225 →

5/6

0159681

<u>BILD 5</u>

6/6    0159681

BiLD 6

BiLD 7

BiLD 8